# EUROPEAN PATENT APPLICATION

(11) **EP 3 780 240 A1**
(43) Date of publication of application: **17.02.2021**
(21) Application number: 19777987.9
(22) Date of filing: 27.02.2019
(51) Int. Cl.: H01M 10/0585, H01M 2/02, H01M 4/131, H01M 4/133, H01M 4/134, H01M 4/1391, H01M 4/1393, H01M 4/1395, H01M 10/052, H01M 10/0525, H01M 10/0566

(54) **LITHIUM SECONDARY BATTERY**

(30) Priority: 27.03.2018 JP 2018060046
(71) Applicant: NGK Insulators, Ltd., Nagoya-shi, Aichi 467-8530 (JP)
(72) Inventor: OTSUKA, Haruo, Nagoya-shi, Aichi 467-8530 (JP); FUJITA, Yuki, Nagoya-shi, Aichi 467-8530 (JP)
(74) Representative: Müller-Boré & Partner Patentanwälte PartG mbB
(86) International application number: PCT/JP2019/007648
(87) International publication number: WO 2019/187934

(57) **Abstract**

A positive electrode (2) of a lithium secondary battery (1) includes a sheet-like positive electrode current collector (21) having conductivity and a positive electrode active material plate (22) that is a plate-like ceramic sintered compact containing a lithium complex oxide. The positive electrode active material plate (22) is joined to the positive electrode current collector (21) and opposes a separator (4). A negative electrode (3) includes a sheet-like negative electrode current collector (31) having conductivity and a negative electrode active material layer (32) containing a carbonaceous material or a lithium occlusion substance. The negative electrode active material layer (32) coats the negative electrode current collector (31) and opposes the separator (4). An outer sheath (6) is joined to the positive electrode current collector (21) via a positive electrode joint layer (63) and joined to the negative electrode current collector (31) via a negative electrode joint layer (64). Joint strength between the negative electrode current collector (31) and the outer sheath (6), i.e., negative electrode joint strength, is lower than joint strength between the positive electrode current collector (21) and the outer sheath (6), i.e., positive electrode joint strength. Accordingly, it is possible to suppress the occurrence of wrinkles in the outer sheath (6).

## Description

### Technical Field

The present invention relates to a thin lithium secondary battery.

### Background Art

As a positive electrode active material layer in a lithium secondary battery (also referred to as a "lithium-ion secondary battery"), a powder dispersion type positive electrode active material layer formed by molding a kneaded mixture of, for example, lithium complex oxide (i.e., lithium transition metal oxide) powder, a binder, and a conductive agent has conventionally been known (Japanese Patent Application Laid-Open No. 2017-79192 (Document 1)). Meanwhile, Japanese Patent No. 5587052 (Document 2) proposes a technique for increasing the capacity of a positive electrode by using a lithium complex oxide sintered plate as a positive electrode active material layer joined to a positive electrode current collector.

In a lithium primary battery disclosed in Japanese Patent Application Laid-Open No. 2013-97931 (Document 3), a positive electrode active material layer formed by molding a kneaded mixture of, for example, manganese dioxide, a binder, and a conductive agent is supported by a positive electrode current collector. Lithium foil serving as a negative electrode active material layer is crimped onto a negative electrode current collector. With this lithium primary battery, a technique for joining the positive electrode current collector and the negative electrode current collector to an outer sheath via a thermoplastic resin is disclosed in order to suppress the occurrence of wrinkles or ruptures in the outer sheath when a bending load is applied.

Incidentally, if a sintered plate is used as a positive electrode active material layer in a thin lithium secondary battery embedded in a smart card or the like, wrinkles may occur in the outer sheath during, for example, a torsion test of the smart card. This occurrence of wrinkles is considered due to stress or other conditions caused between the outer sheath, which is relatively easy to deform, and the sintered plate (i.e., positive electrode active material layer), which is relatively hard to deform. The occurrence of wrinkles cannot be prevented sufficiently enough, even when the joining between the outer sheath and each of the positive current collector and the negative electrode collector, described in Document 3, is applied.

### Summary of Invention

The present invention is intended for a thin lithium secondary battery, and it is an object of the present invention to suppress the occurrence of wrinkles in an outer sheath.

A thin lithium secondary battery according to a preferable embodiment of the present invention includes a positive electrode, a separator laminated on the positive electrode in a predetermined lamination direction, a negative electrode laminated on a side of the separator opposite the positive electrode in the lamination direction, an electrolytic solution with which the positive electrode, the negative electrode, and the separator are impregnated, and a sheet-like outer sheath covering the positive electrode and the negative electrode from opposite sides in the lamination direction and housing therein the positive electrode, the separator, the negative electrode, and the electrolytic solution. The positive electrode includes a sheet-like positive electrode current collector having conductivity, and a positive electrode active material plate that is a plate-like ceramic sintered compact containing a lithium complex oxide, the positive electrode active material plate being joined to the positive electrode current collector and opposing the separator. The negative electrode includes a sheet-like negative electrode current collector having conductivity, and a negative electrode active material layer containing a carbonaceous material or a lithium occlusion substance, the negative electrode active material layer coating the negative electrode current collector and opposing the separator. The outer sheath is joined to the positive electrode current collector via a positive electrode joint layer and joined to the negative electrode current collector via a negative electrode joint layer. Joint strength between the negative electrode current collector and the outer sheath, referred to as negative electrode joint strength, is lower than joint strength between the positive electrode current collector and the outer sheath, referred to as positive electrode joint strength. According to the present invention, it is possible to suppress the occurrence of wrinkles in the outer sheath.

Preferably, the positive electrode joint strength and the negative electrode joint strength are both higher than or equal to 1N/15 mm, and a difference between the positive electrode joint strength and the negative electrode joint strength is greater than or equal to 0.8N/15 mm.

Preferably, the positive electrode joint layer has a thickness greater than or equal to 0.5 µm and less than or equal to 10 µm, and the negative electrode joint layer has a thickness greater than or equal to 0.5 µm and less than or equal to 10 µm.

Preferably, the lithium secondary battery is used as a power supply source in a sheet-like device or a device having flexibility. More preferably, the lithium secondary battery is used as a power supply source in a smart card that is the device having flexibility.

These and other objects, features, aspects and advantages of the present invention will become more apparent from the following detailed description of the present invention when taken in conjunction with the accompanying drawings.

### Brief Description of Drawings

Fig. 1 is a sectional view of a lithium secondary battery according to an embodiment; and
Fig. 2 is a plan view of a positive electrode.

### Description of Embodiments

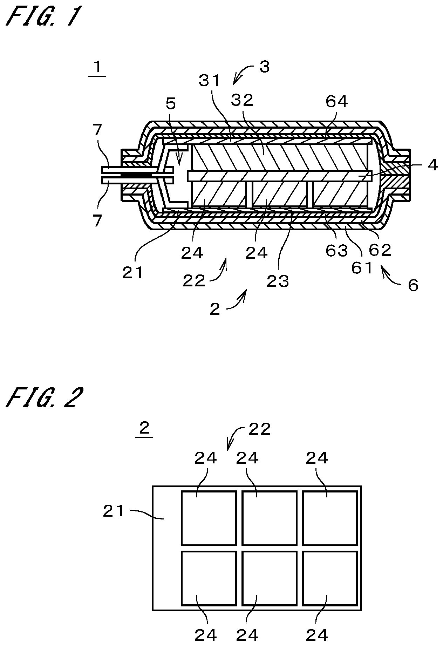

Fig. 1 is a sectional view illustrating a configuration of a lithium secondary battery 1 according to an embodiment of the present invention. In order to facilitate the understanding of the drawing, the lithium secondary battery 1 and its components are illustrated thicker than normal in Fig. 1. Fig. 1 further illustrates the structures of some components present in front and back of the section.

The lithium secondary battery 1 is used as, for example, a power supply source in a sheet-like device or a device having flexibility. The sheet-like device as used herein refers to a thin device that is easy to deform by a relatively small force, and is also referred to as a film device. In the present embodiment, the lithium secondary battery 1 is used as, for example, a power supply source in a smart card having an arithmetic processing function. The smart card is a card-type device having flexibility.

The lithium secondary battery 1 is a small and thin battery. The lithium secondary battery 1 has, for example, a generally rectangular shape in plan view. For example, the lithium secondary battery 1 has a longitudinal length of 27 mm to 46 mm and a lateral length of 38 mm to 46 mm in plan view. The thickness of the lithium secondary battery 1 (i.e., the thickness in the up-down direction in Fig. 1) is, for example, in the range of 0.30 mm to 0.45 mm. The lithium secondary battery 1 is a sheet-like member or a thin plate-like member having flexibility. The sheet-like member as used herein refers to a thin member that is easy to deform by a relatively small force, and is also referred to as a film member. The same applies to the following description.

The lithium secondary battery 1 includes a positive electrode 2, a negative electrode 3, a separator 4, an electrolyte 5, an outer sheath 6, and two terminals 7. In the example illustrated in Fig. 1, the positive electrode 2, the separator 4, and the negative electrode 3 are laminated one above another in the up-down direction in the drawing. In the following description, the upper side and the lower side in Fig. 1 are simply referred to respectively as the "upper side" and the "lower side." The up-down direction in Fig. 1 is simply referred to as the "up-down direction" and also referred to as the "lamination direction." The up-down direction in Fig. 1 does not necessary have to correspond to the actual up-down direction when the lithium secondary battery 1 is embedded in a device such as a smart card.

In the example illustrated in Fig. 1, the separator 4 is laminated on the upper surface of the positive electrode 2 in the lamination direction. The negative electrode 3 is laminated on the upper surface of the separator 4 in the lamination direction. In other words, the negative electrode 3 is laminated on the side of the separator 4 opposite the positive electrode 2 in the lamination direction. For example, the positive electrode 2, the separator 4, and the negative electrode 3 each have a generally rectangular shape in plan view. The positive electrode 2, the separator 4, and the negative electrode 3 have approximately the same shape in plan view (i.e., approximately the same shape and approximately the same size).

The outer sheath 6 is a sheet-like member. The outer sheath 6 is formed of, for example, a laminated film in which metal foil 61 formed of a metal such as aluminum and a resin layer 62 having insulating properties are laminated one above the other. The outer sheath 6 is a bag-like member in which the resin layer 62 is located inside the metal foil 61.

The outer sheath 6 covers the positive electrode 2 and the negative electrode 3 from opposite sides in the lamination direction. The outer sheath 6 houses therein the positive electrode 2, the separator 4, the negative electrode 3, and the electrolyte 5. The electrolyte 5 exists continuously around the positive electrode 2, the separator 4, and the negative electrode 3. In other words, the electrolyte 5 exists between the positive electrode 2 and the negative electrode 3. The electrolyte 5 is a liquid electrolytic solution with which the positive electrode 2, the separator 4, and the negative electrode 3 are impregnated. In Fig. 1, the electrolyte 5 is not cross-hatched. The two terminals 7 protrude outward from the inside of the outer sheath 6. In the outer sheath 6, one of the terminal 7 is electrically connected to the positive electrode 2, and the other terminal 7 is electrically connected to the negative electrode 3.

The positive electrode 2 includes a positive electrode current collector 21, a positive electrode active material plate 22, and a conductive joint layer 23. The positive electrode current collector 21 is a sheet-like member having conductivity. The lower surface of the positive electrode current collector 21 is joined to the resin layer 62 of the outer sheath 6 via a positive electrode joint layer 63. The positive electrode active material plate 22 is a relatively thin plate-like ceramic sintered compact that contains a lithium complex oxide. The positive electrode active material plate 22 is joined to the upper surface of the positive electrode current collector 21 via the conductive joint layer 23. The positive electrode active material plate 22 opposes the separator 4 in the up-down direction.

The positive electrode current collector 21 includes, for example, metal foil formed of a metal such as aluminum and a conductive carbon layer laminated on the upper surface of the metal foil. In other words, the main surface of the positive electrode current collector 21 that opposes the positive electrode active material plate 22 is covered with the conductive carbon layer. The aforementioned metal foil may be formed of any of various metals other than aluminum (e.g., stainless steel). The aforementioned conductive carbon layer may be omitted from the positive electrode current collector 21.

The positive electrode joint layer 63 is formed of, for example, a mixture of resins including an acid-denatured polyolefin resin and an epoxy resin. The positive electrode joint layer 63 may be formed of any of other various materials. The thickness of the positive electrode joint layer 63 is, for example, in the range of 0.5 µm to 10 µm, preferably in the range of 0.5 µm to 5 µm, and more preferably in the range of 0.5 µm to 3 µm. Joint strength between the positive electrode current collector 21 and the outer sheath 6 with the positive electrode joint layer 63 (hereinafter, referred to as "positive electrode joint strength") is, for example, higher than or equal to 1N/15 mm, preferably higher than or equal to 1.5N/15 mm, and more preferably higher than or equal to 2.0N/15 mm. The upper limit of the positive electrode joint strength is not particularly limited, but typically the positive electrode joint strength is lower than or equal to 12N/15 mm.

The positive electrode active material plate 22 has a structure in which a plurality of (i.e., a large number of) primary particles are coupled to one another. These primary particles are composed of a lithium complex oxide having a layered rock-salt structure. The lithium complex oxide is typically an oxide expressed by a general formula: Li_{P}MO₂, where 0.05 < p < 1.10. M is at least one type of transition metal and contains, for example, one or more types selected from cobalt (Co), nickel (Ni), and manganese (Mn). The layered rock-salt structure as used herein refers to a crystal structure in which a lithium layer and a transition metal layer other than lithium are laminated alternately with an oxygen layer in between. That is, the layered rock-salt structure is a crystal structure in which a transition metal ion layer and a single lithium layer are laminated alternately with oxide ions in between (typically, an α-NaFeO₂-type structure, i.e., a structure in which a transition metal and lithium are arranged regularly in the (111) axial direction of a cubic rock-salt structure).

The conductive joint layer 23 includes conductive powder and a binder. The conductive powder is, for example, powder such as acetylene black or ketjen black. The conductive joint layer 23 is formed by applying the conductive powder and the binder described above as well as a liquid or paste adhesive containing a solvent to the positive electrode current collector 21 or the positive electrode active material plate 22 and causing the solvent to evaporate and solidify between the positive electrode current collector 21 and the positive electrode active material plate 22.

Fig. 2 is a plan view illustrating the positive electrode 2. The positive electrode active material plate 22 includes a plurality of active material plate elements 24. The active material plate elements 24 are each joined to the positive electrode current collector 21 via the conductive joint layer 23. The active material plate elements 24 are arranged in a matrix (i.e., in grid form) on the positive electrode current collector 21. Each active material plate element 24 has, for example, a generally rectangular shape in plan view. The active material plate elements 24 have approximately the same shape in plan view (i.e., approximately the same shape and approximately the same size). The active material plate elements 24 are spaced from one another in plan view.

In the example illustrated in Fig. 2, six active material plate elements 24 having a generally square shape in plan view are arranged in a 2 by 3 matrix of elements. One side of each active material plate element 24 has a length of, for example, 9.5 mm to 10.5 mm in plan view. Note that the number of active material plate elements 24 and the arrangement thereof may be modified in various ways. The shape of each active material plate element 24 may also be modified in various ways.

In the lithium secondary battery 1, joint strength between the positive electrode current collector 21 and the outer sheath 6 in regions that overlap with each active material plate element 24 in the lamination direction is higher than joint strength between the positive electrode current collector 21 and the outer sheath 6 in regions that overlap with the interstices between the active material plate elements 24 in the lamination direction.

The thickness of the positive electrode current collector 21 is, for example, in the range of 9 µm to 50 µm, preferably in the range of 9 µm to 20 µm, and more preferably in the range of 9 µm to 15 µm. The thickness of the positive electrode active material plate 22 (i.e., the thickness of each active material plate element 24) is, for example, in the range of 15 µm to 200 µm, preferably in the range of 30 µm to 150 µm, and more preferably in the range of 50 µm to 100 µm. The thickness of the conductive joint layer 23 (i.e., the thickness of each joint layer element 25) is, for example, in the range of 3 µm to 28 µm, preferably in the range of 3 µm to 15 µm, and more preferably in the range of 3 µm to 10 µm.

The negative electrode 3 includes a negative electrode current collector 31 and a negative electrode active material layer 32. The negative electrode current collector 31 is a sheet-like member having conductivity. The upper surface of the negative electrode current collector 31 is joined to the resin layer 62 of the outer sheath 6 via a negative electrode joint layer 64. The negative electrode active material layer 32 includes a carbonaceous material or a lithium occlusion substance. The negative electrode active material layer 32 coats the lower surface of the negative electrode current collector 31. The negative electrode active material layer 32 opposes the separator 4 in the up-down direction.

The negative electrode current collector 31 is, for example, metal foil formed of a metal such as copper (Cu). The metal foil may be formed of any of various metals other than copper (e.g., nickel). The rigidity of the negative electrode current collector 31 against bending in the lamination direction is, for example, higher than the rigidity of the positive electrode current collector 21 against bending in the lamination direction. In the negative electrode active material layer 32, the carbonaceous material is, for example, graphite, and the lithium occlusion substance is, for example, silicon.

The negative electrode joint layer 64 is formed of, for example, a mixture of resins including an acid-denatured polyolefin resin and an epoxy resin. The negative electrode joint layer 64 may be formed of any of other various materials. The negative electrode joint layer 64 is formed of, for example, substantially the same material as that for the positive electrode joint layer 63 (i.e., a material having, for example, approximately the same components and approximately the same content of each component). The thickness of the negative electrode joint layer 64 is, for example, in the range of 0.5 µm to 10 µm, preferably in the range of 0.5 µm to 5 µm, and more preferably in the range of 0.5 µm to 3 µm. Joint strength between the negative electrode current collector 31 and the outer sheath 6 with the negative electrode joint layer 64 (hereinafter, referred to as "negative electrode joint strength") is, for example, higher than or equal to 0.8N/15 mm, preferably higher than or equal to 1.2N/15 mm, and more preferably higher than or equal to 2.0N/15 mm. The upper limit of the negative electrode joint strength is not particularly limited, but typically the negative electrode joint strength is lower than or equal to 12N/15 mm.

The negative electrode joint strength is lower than the positive electrode joint strength. A difference between the positive electrode joint strength and the negative electrode joint strength is, for example, greater than or equal to 0.8N/15 mm, preferably greater than or equal to 1N/15 mm, and more preferably greater than or equal to 2N/15 mm. The upper limit of the difference between the positive electrode joint strength and the negative electrode joint strength is not particularly limited, but typically this difference is typically less than or equal to 6N/15 mm, and more less than or equal to 5N/15 mm.

The thickness of the negative electrode current collector 31 is, for example, in the range of 8 µm to 25 µm, preferably in the range of 8 µm to 20 µm, and more preferably in the range of 8 µm to 15 µm. The thickness of the negative electrode active material layer 32 is, for example, in the range of 50 µm to 200 µm, preferably in the range of 70 µm to 180 µm, and more preferably in the range of 80 µm to 150 µm.

As described above, the lithium secondary battery 1 includes the positive electrode 2, the separator 4, the negative electrode 3, the electrolyte 5, and the outer sheath 6. The separator 4 is laminated on the positive electrode 2 in a predetermined lamination direction. The negative electrode 3 is laminated on the side of the separator 4 opposite the positive electrode 2 in the lamination direction. The electrolyte 5 is an electrolytic solution with which the positive electrode 2, the negative electrode 3, and the separator 4 are impregnated. The outer sheath 6 is a sheet-like member that covers the positive electrode 2 and the negative electrode 3 from the opposite sides in the lamination direction. The outer sheath 6 houses therein the positive electrode 2, the separator 4, the negative electrode 3, and the electrolyte 5.

The positive electrode 2 includes the sheet-like positive electrode current collector 21 having conductivity and the positive electrode active material plate 22 that is a plate-like ceramic sintered compact containing a lithium complex oxide. The positive electrode active material plate 22 is joined to the positive electrode current collector 21 and opposes the separator 4. The negative electrode 3 includes the sheet-like negative electrode current collector 31 having conductivity and the negative electrode active material layer 32 containing a carbonaceous material or a lithium occlusion substance. The negative electrode active material layer 32 coats the negative electrode current collector 31 and opposes the separator 4. The outer sheath 6 is joined to the positive electrode current collector 21 via the positive electrode joint layer 63 and joined to the negative electrode joint layer 64 via the negative electrode current collector 31. The joint strength between the negative electrode current collector 31 and the outer sheath 6, i.e., the negative electrode joint strength, is lower than the joint strength between the positive electrode current collector 21 and the outer sheath 6, i.e., the positive electrode joint strength.

In this way, the lithium secondary battery 1 has high joint strength (i.e., positive electrode joint strength) between the outer sheath 6 and the positive electrode 2 provided with the positive electrode active material plate 22 that possesses relatively high rigidity, and has low joint strength (i.e., negative electrode joint strength) between the outer sheath 6 and the negative electrode 3 provided with the negative electrode active material layer 32 that possesses relatively low rigidity. In other words, the positive electrode 2, which is relatively east to deform, is bonded firmly to the outer sheath 6, and the negative electrode 3, which is relatively hard to deform, is joined weakly to the outer sheath 6. This reduces a difference between the stress induced between the positive electrode 2 and the outer sheath 6 and the stress induced between the negative electrode 3 and the outer sheath 6 in twisting the lithium secondary battery 1 (e.g., twisting the opposite right and left ends of the lithium secondary battery 1 in opposite directions). As a result, it is possible to suppress the occurrence of wrinkles in the outer sheath 6 due to, for example, a difference in flexural rigidity between the positive electrode 2 and the negative electrode 3.

As described above, it is possible in the lithium secondary battery 1 to suppress the occurrence of wrinkles in the outer sheath 6 when the lithium secondary battery 1 becomes deformed. Accordingly, the lithium secondary battery 1 is particularly suitable for use as a power supply source in a device that is relatively easy to deform and that is likely to receive bending loads, i.e., a sheet-like device or a device having flexibility. In the case where the lithium secondary battery 1 is used as a power supply source in a smart card, which is one of the devices having flexibility, it is possible to suitably achieve both a reduction in the thickness of the smart card and a reduction of swellings in the card surface due to wrinkles formed in the outer sheath 6 when the smart card becomes deformed.

For a smart card embedding the lithium secondary battery 1, Tables 1 and 2 show the relationships of the positive electrode joint strength and the negative electrode joint strength of the lithium secondary battery 1 and swellings formed in the card surface when the smart card becomes deformed. In Examples 1 to 5, the positive electrode joint strength is higher than the negative electrode joint strength, whereas in Comparative Examples 1 and 2, the positive electrode joint strength is lower than the negative electrode joint strength. In Examples 1 to 5, the positive electrode joint strength is 1.1 times or more and 2.5 times or less the negative electrode joint strength. The positive electrode joint strength was changed by changing the joint temperature of the positive electrode current collector 21 and the positive electrode 2 and the pressure applied during adhesion. The same applies to the negative electrode joint strength.

**Table 1**

| | Joint Temperature (°C) | | Pressure (MPa) | |
|---|---|---|---|---|
| | Positive Electrode | Negative Electrode | Positive Electrode | Negative Electrode |
| Example 1 | 120 | 120 | 2 | 2 |
| Example 2 | 80 | 80 | 2 | 2 |
| Example 3 | 120 | 140 | 2 | 2 |
| Example 4 | 80 | 80 | 1.5 | 1.5 |
| Example 5 | 80 | 80 | 1.2 | 1.2 |
| Comparative Example 1 | 80 | 100 | 2 | 2 |
| Comparative Example 2 | 120 | 140 | 2 | 4 |

**Table 2**

| | Joint Strength (N/15mm) | | Maximum Swelling in Card Surface (µm) |
|---|---|---|---|
| | Positive Electrode | Negative Electrode | |
| Example 1 | 8.5 | 4.7 | 12 |
| Example 2 | 3.1 | 2.2 | 23 |
| Example 3 | 8.3 | 7.5 | 35 |
| Example 4 | 2.2 | 1.2 | 38 |
| Example 5 | 2.0 | 0.8 | 45 |
| Comparative Example 1 | 2.8 | 3.6 | 75 |
| Comparative Example 2 | 7.9 | 11.3 | 68 |

The positive electrode joint strength and the negative electrode joint strength in Table 2 were obtained by a peel test. This peel test was conducted in accordance with the following procedure, using a peel tester. As the peel tester, a force gauge "ZTA-20N," a vertical monitored test stand "MX2-500N," and a film chuck "FC-21" manufactured by IMADA Co., Ltd. were used.

In this peel test, the lithium secondary battery 1 was first taken apart into a structure in which the positive electrode 2 and the outer sheath 6 were joined together via the positive electrode joint layer 63 (hereinafter, referred to as a "positive electrode-outer sheath joint laminate") and a structure in which the negative electrode 3 and the outer sheath 6 were joined together via the negative electrode joint layer 64 (hereinafter, referred to as a "negative electrode-outer sheath joint laminate").

In the case of obtaining the positive electrode joint strength, the positive electrode active material plate 22 was removed from the positive electrode-outer sheath joint laminate, and a strip of test specimen (15 mm wide and 25 mm long) was cut out from a portion where the positive electrode current collector 21 and the outer sheath 6 were joined together. Then, the positive electrode current collector 21 and the outer sheath 6 are peeled by a length of 5 mm at one end of the test specimen in the direction along the length. Then, the peeled portion of the test specimen (i.e., the end portion of the positive electrode current collector 21 and the end portion of the outer sheath 6) were caught and held by the film chuck serving as the peel tester. Then, a T-peel test was conducted at a tension speed of 300 mm/min, and a maximum value for tensile strength observed when the positive electrode current collector 21 was peeled from the outer sheath 6 was acquired as the "positive electrode joint strength."

In the case of obtaining the negative electrode joint strength, a strip of test specimen (15-mm wide and 25-mm long) was cut out from a portion where the negative electrode current collector 31 and the outer sheath 6 were joined together. Then, the negative electrode current collector 31 and the outer sheath 6 were peeled by a length of 5 mm at one end of the test specimen in the direction along the length. Then, the peeled portion of the test specimen (i.e., the end portion of the negative electrode current collector 31 and the end portion of the outer sheath 6) was caught and held by the film chuck serving as the peel tester. Then, a T-peel test was conducted at a tension speed of 300 mm/min, and a maximum value for tensile strength observed when the negative electrode current collector 31 was peeled from the outer sheath 6 was acquired as the "negative electrode joint strength."

A maximum swelling in the card surface in Table 2 indicates a maximum height of swellings in the card surface after a smart-card torsion test compliant with JIS X 6305-1 (ISO/IEC10373-1). In Examples 1 to 5, the maximum swellings in the card surface are suppressed to 45 µm or less, and the results of the torsion test are favorable. On the other hand, in Comparative Examples 1 and 2, the maximum swellings in the card surface are greater than 45 µm.

As described above, the positive electrode joint strength and the negative electrode joint strength are both preferably higher than or equal to 1N/15 mm. The difference between the positive electrode joint strength and the negative electrode joint strength is preferably greater than or equal to 0.8N/15 mm. In this case, as in Examples 1 to 4, the maximum swelling in the card surface can be suppressed to less than 40 µm. That is, it is possible to more favorably suppress the occurrence of wrinkles in the outer sheath 6 when the lithium secondary battery 1 becomes deformed.

As described above, the thickness of the positive electrode joint layer 63 is preferably greater than or equal to 0.5 µm and less than or equal to 10 µm. The thickness of the negative electrode joint layer 64 is also preferably greater than or equal to 0.5 µm and less than or equal to 10 µm. In this case, it is possible to achieve favorable joining between the positive electrode 2 and the outer sheath 6 and between the negative electrode 3 and the outer sheath 6 while achieving a reduction in the thickness of the lithium secondary battery 1.

In the lithium secondary battery 1, the positive electrode joint layer 63 and the negative electrode joint layer 64 are formed of the same material. This simplifies the manufacture of the lithium secondary battery 1.

The aforementioned lithium secondary battery 1 may be modified in various ways.

For example, the positive electrode active material plate 22 does not necessarily have to be divided into a plurality of active material plate elements 24, and may be a single plate-like ceramic sintered compact.

The positive electrode joint layer 63 and the negative electrode joint layer 64 may be formed of different materials (e.g., different types of resin).

The thickness of the positive electrode joint layer may be less than 0.5 µm and may be greater than 10 µm. Similarly, the thickness of the negative electrode joint layer 64 may be less than 0.5 µm and greater than 10 µm.

The positive electrode joint strength may be less than 1N/15 mm. Similarly, the negative electrode joint strength may be less than 1N/15 mm. The difference between the positive electrode joint strength and the negative electrode joint strength may be less than 0.8N/15 mm.

The rigidity of the negative electrode current collector 31 against bending in the lamination direction may be lower than the rigidity of the positive electrode current collector 21 against bending in the lamination direction, or they may be approximately the same.

The lithium secondary battery 1 may be used as a power supply source in a device having flexibility (e.g., a card-type device) other than a smart card or in a sheet-like device (e.g., a wearable device mounted on clothing or a body-attached device). The lithium secondary battery 1 may also be used as a power supply source in various objects (e.g., an IoT module) other than the aforementioned devices.

The configurations of the above-described preferred embodiments and variations may be appropriately combined as long as there are no mutual inconsistencies.

While the invention has been shown and described in detail, the foregoing description is in all aspects illustrative and not restrictive. It is therefore understood that numerous modifications and variations can be devised without departing from the scope of the invention.

### Industrial Applicability

The lithium secondary battery according to the present invention is applicable as, for example, a power supply source in a smart card having an arithmetic processing function in various fields using lithium secondary batteries.

### Reference Signs List

- 1: Lithium secondary battery
- 2: Positive electrode
- 3: Negative electrode
- 4: Separator
- 5: Electrolyte
- 6: Outer sheath
- 21: Positive electrode current collector
- 22: Positive electrode active material plate
- 31: Negative electrode current collector
- 32: Negative electrode active material layer
- 63: Positive electrode joint layer
- 64: Negative electrode joint layer

## Claims

1. A thin lithium secondary battery comprising:
a positive electrode;
a separator laminated on said positive electrode in a predetermined lamination direction;
a negative electrode laminated on a side of said separator opposite said positive electrode in said lamination direction;
an electrolytic solution with which said positive electrode, said negative electrode, and said separator are impregnated; and
a sheet-like outer sheath covering said positive electrode and said negative electrode from opposite sides in said lamination direction and housing therein said positive electrode, said separator, said negative electrode, and said electrolytic solution,
wherein said positive electrode includes:
a sheet-like positive electrode current collector having conductivity; and
a positive electrode active material plate that is a plate-like ceramic sintered compact containing a lithium complex oxide, said positive electrode active material plate being joined to said positive electrode current collector and opposing said separator,
said negative electrode includes:
a sheet-like negative electrode current collector having conductivity; and
a negative electrode active material layer containing a carbonaceous material or a lithium occlusion substance, said negative electrode active material layer coating said negative electrode current collector and opposing said separator,
said outer sheath is joined to said positive electrode current collector via a positive electrode joint layer and joined to said negative electrode current collector via a negative electrode joint layer, and
joint strength between said negative electrode current collector and said outer sheath, referred to as negative electrode joint strength, is lower than joint strength between said positive electrode current collector and said outer sheath, referred to as positive electrode joint strength.

2. The lithium secondary battery according to claim 1, wherein
said positive electrode joint strength and said negative electrode joint strength are both higher than or equal to 1N/15 mm, and
a difference between said positive electrode joint strength and said negative electrode joint strength is greater than or equal to 0.8N/15 mm.

3. The lithium secondary battery according to claim 1 or 2, wherein
said positive electrode joint layer has a thickness greater than or equal to 0.5 µm and less than or equal to 10 µm, and
said negative electrode joint layer has a thickness greater than or equal to 0.5 µm and less than or equal to 10 µm.

4. The lithium secondary battery according to any one of claims 1 to 3, being used as a power supply source in a sheet-like device or a device having flexibility.

5. The lithium secondary battery according to claim 4, being used as a power supply source in a smart card that is said device having flexibility.
